# EUROPEAN PATENT APPLICATION

(11) **EP 4 252 545 A1**
(43) Date of publication of application: **04.10.2023**
(21) Application number: 22211977.8
(22) Date of filing: 07.12.2022
(51) Int. Cl.: A23L 3/349, A01N 31/14, A01N 33/12, A01N 55/00, A01N 59/00, A01P 1/00, A23L 3/3526, B65B 55/10, B65B 55/22, B65B 61/22, A23B 4/10, A23B 4/14, A23B 7/14, A23B 7/16

(54) **METHODS AND ARTICLES FOR KEEPING FOOD FRESHER FOR LONGER AND SHELF-LIFE EXTENSION TO ENHANCE FOOD SECURITY AND SAFETY**

(30) Priority: 18.03.2022 US 202217698942; 10.10.2022 US 202217962546
(71) Applicant: Zoono Group Ltd., 2013 Bottany, South Auckland (NZ)
(72) Inventor: Hyslop, Paul, Remuera (NZ)
(74) Representative: J A Kemp LLP

(57) **Abstract**

Disclosed is technology to solve the problem in a world that is inundated with microbes of keeping food fresher for longer and shelf-life extension to enhance food security and safety without refrigeration/freezing, chemical preservatives integrated into the food product and/or physically/chemically altering the food product. Aspects of the technology are directed at the three levels of the food delivery system; namely, supermarket style display ware, bulk packaging and overseas container. This technological problem is solved by situating on food contacting/abutting surfaces of display ware, bulk packaging and oversees containers an antimicrobe agent formulated as a composition comprised of (i) between about 0.25% (w/w) to about 0.75% (w/w) benzalkonium chloride; (ii) between about 0.02% (w/w) to about 1.00% (w/w) of a kill agent selected from the group consisting of hydrogen peroxide and phenoxyethanol; (iii) between about 0.25% (w/w) to about 0.75% (w/w) 3-(tri-methoxysilyl)propyldimethyl octadecyl ammonium chloride and (iv) between about 97.50% (w/w) to about 99.48% deionized water.

## Description

### CROSS-REFERENCE TO RELATED APPLICATIONS

This application claims priority from U.S. Non-Provisional Application Serial No. 17/180,161 which was filed on February 19, 2021. The entirety of U.S. Non-Provisional Application Serial No. 17/180,161 which was filed on February 19, 2021 is incorporated herein by reference.

This application also claims priority from PCT/IB2021/053643 which was filed on April 30, 2021. The entirety of PCT/IB2021/053643 which was filed on April 30, 2021 is incorporated herein by reference.

This application also claims priority from EP21194867.4 which was filed on September 3, 2021. The entirety of EP21194867.4 which was filed on September 3, 2021 is incorporated herein by reference.

This application also claims priority from U.S. Non-Provisional Application Serial No. 17/698,942 which was filed on March 18, 2022. The entirety of U.S. Non-Provisional Application Serial No. 17/698,942 which was filed on March 18, 2022 is incorporated herein by reference.

### BACKGROUND OF THE INVENTION

### 1. Field of the Invention

This invention pertains generally to keeping food fresher for longer and food shelf-life extension for enhanced food security and safety and more particularly to organosilane containing compositions situated on surfaces of physical structures that are containers for food for doing the same.

### 2. Related Art

Microorganism pose a danger to the worldwide food supply that feeds the entire human population. The magnitude of this danger ranges from microbes rendering unfit a quantity of packaged food, to a shipment of food, to a regional situation of particular foods being unfit for consumption all the way to a global crisis threatening starvation to billions. The most significant microorganisms that spoil and contaminate food are Salmonella, Staphylococcus aureus, Listeria, Campylobacter, Escherichia coli, Pseudomonas aeruginosa and Aspergillus niger.

One point of vulnerability to microbial attack is at the stage of food being packaged for purchase at supermakets. Typically, food products are packaged into "supermarket style display ware." "Supermarket style display ware" denotes an omnibus category of articles of manufacture for merchandising food in supermarkets. Supermarket style display ware is generally made from plastics (typically, polystyrene, expanded polystyrene foam (EPS), high impact polystyrene (HIPS), polypropylene, recycled polypropylene (e.g., Corflute brand sheeting), polycarbonate and copolymers of the foregoing); wood derived materials (typically, paper, cardboard and wood itself); non-wood natural plants (typically, sugarcane bagasse, bamboo and biocane); metals (typically, aluminum and alloys) and combinations of the foregoing. These materials are generally fashioned into bags (typically, plastic and paper); bale arm crates (typically, plastic); pouches (typically, Plastic); sheeting (typically, plastic and paper); trays (typically, EPS, HIPS, aluminum and alloy) and wrapping (typically shrink, bubble and pallet.)

Another point of vulnerable to microbial attack is at the stage of food being transported for local, national and continental transit. Routinely, fresh fruits, fresh vegetables, meats, chicken and/or other foods (food products) are bulk packaged (i.e., boxed) in corrugated cardboard containers and distributed locally and globally in these corrugated cardboard containers (boxes.) While so packaged in corrugated cardboard containers, the food products are subject to microbial attack with a concomitant spoiling and financial loss.

A final point of vulnerability to microbial attack on a large scale is at the stage of food products being transported internationally. Routinely, food is transported overseas in overseas shipping containers. An overseas shipping container is a box having six planar sides and a hollow interior which performs the function of being a holding space for goods. Generally, overseas shipping containers are made of steel and structured to be sufficiently strong to endure tons of load. Overseas shipping containers are standardly sized. The standard width and height of the container is about 8 feet by about 8 feet. There are three standard lengths; namely, about 10 feet, about 20 feet and about 40 feet with 20 feet and 40 feet being most used.

While being transported internationally in overseas shipping containers, food products perish from microbial attack. One of the biggest risks in exporting and importing fresh produce is the possibility of the container being rejected due to microbial contamination. If any of the food items in an overseas shipping container show sign of microbial contamination, e.g., mold, the entire container can be rejected at a large financial loss.

Known in the art are physical treatments of food products to retard deterioration and spoilage. These physical treatments include heating/boiling (i.e., killing microorganisms by denaturation) followed by hermetically sealed canning (i.e., to impeded recontamination.) Typically, refrigeration and freezing are used to slow the growth of microorganism and pathogens. Another physical treatment is drying and moisture removal. This retards the growth of microbes which require water.

These physical treatments have the disadvantages of altering the taste, color and aroma of the food, requiring bulky and expensive equipment and being energy intensive. These physical treatments have the disadvantages of being of limited effectiveness, especially against bacterial spores which are hardy to resist both heat, cold and drought.

Known in the art are natural chemical treatments of food products to retard deterioration and spoilage. The most rudimentary of these are salting (e.g., sprinkling with sodium chloride) and vinegar (e.g., pickling vegetables and fish.) Under certain circumstances, other natural substances can act as a food preservative; e.g., a high concentrate sugar solution and lemon juice. These natural chemical treatments have the disadvantage of altering the taste, color and aroma of the food, adding cost and of being of limited effectiveness at stopping the growth of microbes and pathogens.

Known in the art are synthetic chemical preservatives that are non-natural synthetic substances that are integrated into the food product. The most popular of which are benzoate salts (calcium, potassium and sodium); Butylated hydroxyanisole; Butylated hydroxytoluene; ethylenediaminetetraacetic acid salts (disodium); nitrites; polyphosphates; propionate salts and sulfites (e.g., potassium bisulfite, potassium metabisulfite sodium bisulfite, sodium metabisulfite and sodium sulfite.) The synthetic chemical preservatives have the disadvantage of potentially being harmful to the human body (e.g., carcinogens, endocrine disruptors and induce drowsiness), being undesired by consumers who at the time of the filing of the application leading to this patent have a bias in favor of organic foods and adding costs.

Known in the art is Dossier-Biocides and food contact materials dated as published in July, 2014 by Birgit Geueke. Geueke summarizes and reviews that there are 11 classes of biocides widely applied to food contact materials. Among these 11 classes are quaternary ammonium compounds (QATs.) Geueke specifically calls out the QAT of benzalkonium chloride. While calling out eleven classes of biocides and including QATs, Geueke makes no mention of silyl QATs and thereby directs a skilled artists away from utilizing silyl quats as a biocide to be applied to food contact materials. Finally, Geueke does not disclose coformulations of biocides and an inventor is not directed to thinking that a heightened and unexpected result may be achievable by coformulations.

Known in the art is US Patent Publication 2018/0035664 with a publication date of February 8, 2018 by Elowe et al entitled Material for Packaging Comprising Antimicrobial Composition. Elowe denigrates and teaches away from the coating of a packaging surface with an antimicrobial agent lacking a viscosity enhancing carrier as not effective because, such coatings are typically aqueous-based and therefore drip off the surface of the foodstuff thereby collecting in pockets in the packaging and immobilization of an antimicrobial agent onto a packaging substrate inherently reduces the mobility of the antimicrobial agent and affects efficacy.

Elowe et al further teaches away from utilizing as an antimicrobe agent dimethyloctadecy1[3-trimethoxysilyl)propy1]ammonium chloride, a silyl quat, without a viscosity enhancing carrier by affirmatively claiming as superior food packaging comprised of (a) a substrate and (b) an antimicrobial composition comprising (i) an active antimicrobial agent and (ii) a carrier, wherein the antimicrobial composition has a viscosity of at least 50 centipoise at temperatures between 2° C. and 12° C. Elowe et al. direct a skilled artisan to formulate a silyl quat with viscosity carrier so as to achieve the advantages of prolonged contact time on the surface of the food where the antimicrobial agent can remain fully mobile to improve efficacy. Lastly, Elowe et al. direct a skilled artisan to use silyl quat with a viscosity carrier at a concentration of about 2% by weight.

Known in the art is a scientific article with a publication date in January, 2021 by Swarit Ahmed Shadman et al entitled Development of a Benzalkonium Chloride Based Antibacterial Paper for Health and Food Applications*.* Shadman et al. write that they performed experiments of coating paper with an aqueous solution of the benzalkonium chloride (BKC aka BZK) in concentrations ranging from 0.1% by weight to 0.2% by weight. They report experimental results that at 0.15% by weight of BKC there was nearly 100% inhibition of staphylococcus aureus ATCC 6538 and Escherichia coli ATCC 8739. With nearly 100% inhibition at 0.15% by weight BKC, Shadham et al leave a skilled artisan with no reason to think of utilizing a higher concentration of BKC.

Notwithstanding the above referenced art on biocidal food contact materials, microbes are winning the battle against man. Repeating what is written above, microorganism pose a danger to the worldwide food supply that feeds the entire human population. The magnitude of this danger ranges from rendering unfit particular foods in particular regions going all the way to a global crisis threatening starvation to billions.

Not in the field of keeping food fresher for longer, food shelf-life extension and enhanced food security and safety, and not necessarily prior or related art, but known to the applicant of this patent from the course of parent applications from which the present application claims priority is US 6,994,890 filed on October 31, 2003 teaches a kill and protect disinfectant composition comprised of quaternary ammonium silane 3-(tri-methoxysilyl) propyldimethyl octadecyl ammonium chloride in a concentration of 1.0% and hydrogen peroxide in a concentration between 3.0% to 6.0%. [Para 6] US Patent 8,999,357 teaches a kill and protect disinfectant comprised of quaternary ammonium silane 3-(tri-methoxysilyl) propyldimethyl octadecyl ammonium chloride in a concentration of 4.0%, benzalkonium chloride in a concentration of 6.0% and other ingredients.

Not in the field of keeping food fresher for longer, food shelf-life extension and enhanced food security and safety, and not necessarily prior or related art, but known to the applicant of this patent from the course of parent applications from which the present application claims priority is US 8,383,164 filed on February 7, 2006 teaches a kill disinfectant comprised of an aqueous solution of benzalkonium chloridein a concentration between 0.1% to 0.3, hydrogen peroxide in a concentration between 0.1% to 3.0%.

Not in the field of keeping food fresher for longer, food shelf-life extension and enhanced food security and safety, and not necessarily prior or related art, but known to the applicant of this patent from the course of parent applications from which the present application claims priority is World Intellectual Property Organization publication WO2011060132 with an international filing date of November 11, 2010 pertains to a disinfecting apparatus. Within this patent publication is the teaching of a disinfectant solution composed of ingredients selected from a long list of potential ingredients. This long list includes benzalkonium chloride, hydrogen peroxide and quaternary ammonium silane 3-(tri-methoxysilyl) propyldimethyl octadecyl ammonium chloride. There is no guidance on which ingredients to select and no guidance on the percentages of the same in a composition.

Not in the field of keeping food fresher for longer, food shelf-life extension and enhanced food security and safety, and not necessarily prior or related art, but known to the applicant of this patent from the course of parent applications from which the present application claims priority is US Patent 9,445,600 with a PCT filing date of December 28, 2012 teaches a kill and protect disinfectant composition comprised of quaternary ammonium silane 3-(tri-methoxysilyl) propyldimethyl octadecyl ammonium chloride in a concentration between 0.1% to 2.0% with 0.5% preferred, hydrogen peroxide in a concentration between 0.5% to 7.5% with 4.0% preferred and other ingredients.

Accordingly, there exists a need for more robust food security and food safety across a broad range of packaged foods.

There exists a need for methods and articles of manufacture compatible with a variety of substrates for delivering the combination of keeping food fresher for longer and shelf-life extension.

There exists a need for methods and articles of manufacture having the ability to reduce total bacterial count populations by up to 90% in food, including food poisoning pathogens.

There exists a need to extend shelf life of food and to keep food fresher for longer in countervention of contamination by microbes (e.g., mold and bacteria) of fruit, vegetables, meats, chicken and/or other food packed in supermarket style display ware made from plastics, polystyrene, polypropylene, paper, cardboard, wood, non-wood natural plant sugarcane bagasse, bamboo, biocane, corflute configured as plastic bags, plastic sheeting, paper bags, paper sheeting, pouches, shrink wrapping, bubble wrapping, pallet wrapping, bale arm crates, metal trays, aluminum trays and alloy trays.

There exists a need to extend shelf life of food and to keep food fresher for longer in countervention of contamination by microbes (e.g., mold and bacteria) of fruit, vegetables, meats, chicken and/or other food packed in a cardboard box during local, national and/or international transport and concomitantly mitigating the risk of financial loss occasioned by the rejection of a shipment.

There exists a need to extend shelf life of food and to keep food fresher for longer in countervention of contamination by microbes (e.g., mold and bacteria) of fruit, vegetables, meats, chicken and/or other food packed in an overseas shipping container during the modes of local, national and/or international transport and concomitantly mitigating the risk of financial loss occasioned by the rejection of a shipment.

The present invention satisfies these needs, as well as others, and generally overcomes the presently known deficiencies in the art.

### SUMMARY OF THE INVENTION

The present invention is directed to food security and food safety across a broad range of packaged foods.

An object of the present invention is methods and articles of manufacture encompassing a variety of substrates to deliver the combination of keeping food fresher for longer and shelf-life extension.

An object of the present invention is methods and articles of manufacture having the ability to reduce total bacterial count populations by up to 90% in food, including food poisoning pathogens.

An object of the present invention is to extend shelf life of food and to keep food fresher for longer in countervention of contamination by microbes (e.g., mold and bacteria) of fruit, vegetables, meats, chicken and/or other food packed in supermarket style display ware made from plastics, polystyrene, polypropylene, paper, cardboard, wood, non-wood natural plant sugarcane bagasse, bamboo, biocane, corflute configured as plastic bags, plastic sheeting, paper bags, paper sheeting, pouches, shrink wrapping, bubble wrapping, pallet wrapping, bale arm crates, metal trays, aluminum trays and alloy trays.

An object of the present invention is to extend shelf life of food and to keep food fresher for longer in countervention of contamination by microbes (e.g., mold and bacteria) of fruit, vegetables, meats, chicken and/or other food packed in a cardboard box during local, national and/or international transport and concomitantly mitigating the risk of financial loss occasioned by the rejection of a shipment.

An object of the present invention is to extend shelf life of food and to keep food fresher for longer in countervention of contamination by microbes (e.g., mold and bacteria) of fruit, vegetables, meats, chicken and/or other food packed in an overseas shipping container during the modes of local, national and/or international transport and concomitantly mitigating the risk of financial loss occasioned by the rejection of a shipment.

One aspect of the present invention is an antimicrobe supermarket style display ware. The antimicrobe supermarket style display ware is comprised of a supermarket style display ware having food contacting surfaces. Situated on at least a portion of the food contacting surfaces is an antimicrobe agent. The antimicrobe agent is formulated as a composition comprised of (i) between about 0.25% (w/w) to about 0.75% (w/w) benzalkonium chloride; (ii) between about 0.02% (w/w) to about 1.00% (w/w) of a kill agent selected from the group consisting of hydrogen peroxide and phenoxyethanol (iii) between about 0.25% (w/w) to about 0.75% (w/w) 3-(trimethoxysilyl)propyldimethyl octadecyl ammonium chloride and (iv) between about 97.50% (w/w) to about 99.48% deionized water.

Another aspect of the present invention is a method for making the aforementioned antimicrobe supermarket style display ware comprised of a plurality of steps. One step is taking possession of a supermarket style display ware having food contacting surfaces. Another step is taking possession of a supply of antimicrobe agent as described above. A further step is situating antimicrobe agent on least a portion of the food contacting surfaces.

Another aspect of the present invention is a method for keeping food fresher for longer and shelf-life extension to enhance food security and safety comprised of a plurality of steps. One step is taking possession of a food in a configuration suitable for packaging in a supermarket style display ware. Another step is taking possession of an antimicrobe supermarket style display ware as described above. A further step is packaging the food into the antimicrobe supermarket style display ware.

Another aspect of the present invention is an antimicrobe active cardboard. The cardboard has two surfaces and a peripheral edge. Situated on at least a portion of the surface is an antimicrobe agent formulated as a composition as described above.

Another aspect of the present invention is an antimicrobe activate cardboard box for bulk packaging food. The box has a holding space defined by surfaces. At least a portion of the surfaces are antimicrobe active cardboard as described above were the antimicrobe active surface of the cardboard faces the holding space.

Another aspect of the present invention is a manufacturing process for making an antimicrobe active cardboard comprised of a plurality of steps. One step is taking possession of a supply of antimicrobe agent as described above. A further step is utilizing a corrugated cardboard plant having a gantry adapted with a mist system where cover paper passes and is misted with antimicrobe agent. The misting is of at least a portion of the cover paper with antimicrobe agent.

Another aspect of the present invention is a method for keeping food fresher for longer and shelf-life extension to enhance food security and safety. The method is comprised of plurality of steps. One step is taking possession of a food. Another step is taking possession of an antimicrobe container for bulk packaging of food as described above. A further step is packing the food into the antimicrobe container for bulk packing.

Another aspect of the present invention is a method for transforming a container used in containerized shipping having a holding space defined by interior surfaces of the container into an antimicrobe container used in containerized shipping. This method is comprised of a plurality of steps. One step is receiving a shipping container utilized in containerized shipping that is of a clean and empty nature so as to be suitable for loading. Another step is taking possession of a supply of antimicrobe agent as described above. A further step is applying antimicrobe agent to at least a portion of the interior surfaces of said shipping container.

Another aspect of the present invention is a method for keeping food fresher for longer and shelf-life extension to enhance food security and safety. The method is comprised of a plurality of steps. One step is taking possession of a food. Another step is taking possession of an antimicrobe transformed container used in containerized shipping as previously described. A further step is packing the food into the antimicrobe transformed container used in containerized shipping.

The previously described versions of the present invention has many advantages. The overarching advantage is enhanced food security and food safety. Advantageously, the articles and methods can be applied to a variety of substrates to deliver the combination function of shelf-life extension and to keep food fresher for longer. The advantages include an antimicrobial agent that is broad spectrum, cannot to any significance diminish in strength and is long lasting, leach from the surface to which it is applied and encourage microorganism resistance; the ability to reduce total bacterial count populations in food packaging by up to about 90%, including food poisoning pathogens; providing increased food safety across a broad range of packaged foods and contributing to extended shelf life of food products in the market for storage and display.

### BRIEF DESCRIPTION OF THE DRAWINGS

These and other features, aspects and advantages of the present invention will become better understood with reference to the following description, appended claims and accompanying drawings where:
Fig. 1 shows a top perspective view of a supermarket style display ware in the course of having situated on a food contacting surface by spraying an antimicrobe agent according to the present invention where the spray unit is shown by a simplified block diagram;
Fig. 2A shows a cut away planar view of a supermarket style display ware in a bottle configuration having antimicrobe agent situated on an interior food contacting surface according to the present invention;
Fig. 2B shows a top planar view of a supermarket style display ware in a multi-compartment tray configuration made from high impact polycarbonate having antimicrobe agent situated on the entirety of the top of the display ware according to the present invention;
Fig. 2C shows a top perspective view of a supermarket style display ware in a tray configuration made from expanded styrene foam having antimicrobe agent situated on the entirety of the top food contacting surface according to the present invention;
Fig. 2D shows a top planar view of a plurality of supermarket style display ware in a paper framed shrink wrap pouch configuration made from transparent polypropylene having antimicrobe agent situated on the underside and food contacting surface of the poypropylene film according to the present invention with meat and poultry within the pouch for illustrative purposes;
Fig. 3 shows a two-dimensional X-Y axis plot of micro log E. coli CFU/ml (colony forming units per milliliter) vs. time in hours for water in an untreated container and water in a treated a container according to the present invention.

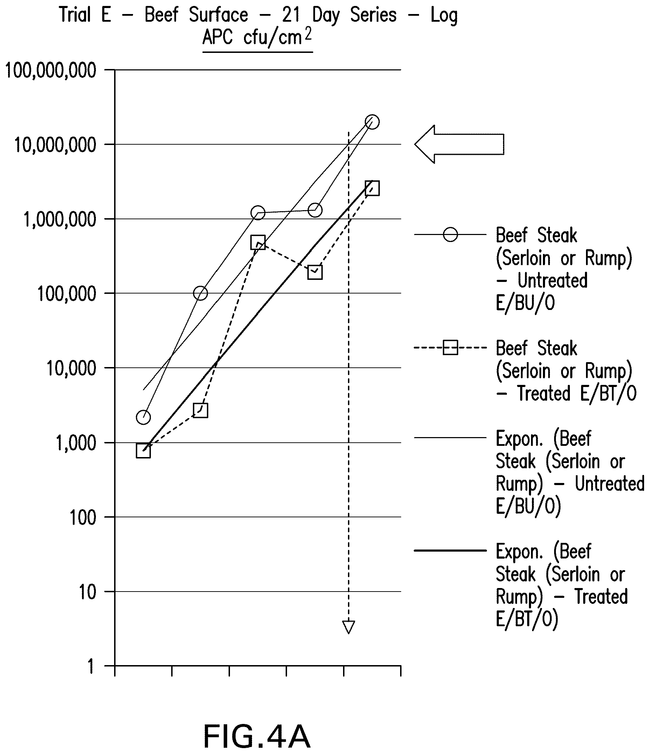

Fig. 4A shows a graphical presentation of data from the beef surface trial;

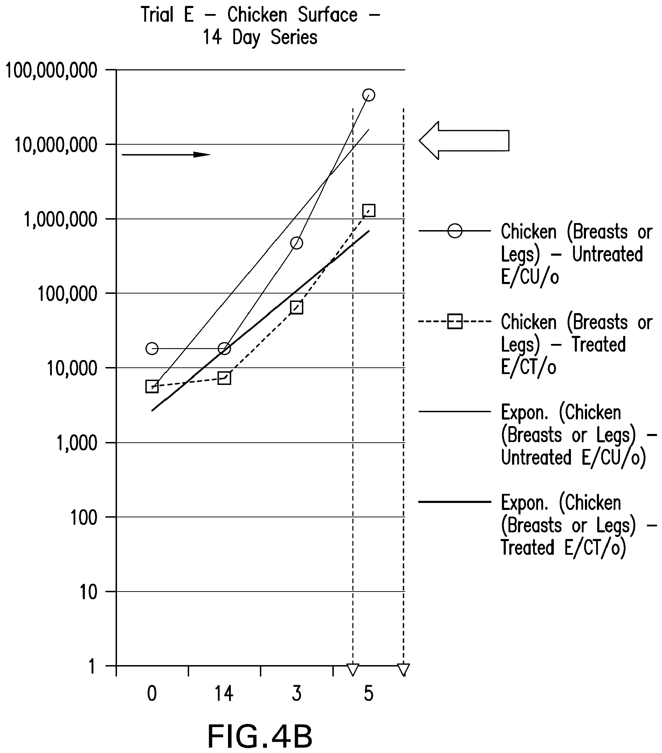

Fig. 4B shows a graphical presentation of data from the chicken surface trial;

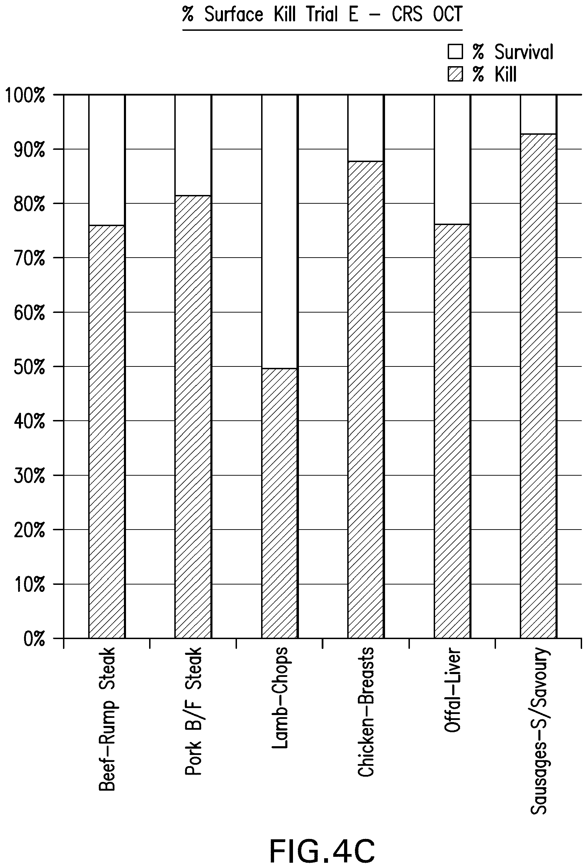

Fig. 4C shows a graphical presentation of the percent surface kill trial;
Figs. 5A, 5B, 5C and 5D show a graphical presentation of the long-lasting effect trials of treated supermarket style display ware according to the present invention.
Fig. 6 shows a side perspective view of an archetype gantry of a corrugated cardboard plant with a spray unit coating with an antimircrobe agent the full width of cover paper travelling over rollers according to the present invention;
Fig. 7 shows a cross-sectional schematic view of an antimicrobe active corrugated cardboard according to the present invention;
Fig. 8 shows a top perspective view of a plurality of shipping boxes for bulk packaging with the top box open showing antimicrobe agent situated on the interior cardboard surface according to the present invention with bananas in the box for illustrative purposes;
Fig. 9 shows a front-end perspective view of an overseas shipping container with the doors open in the process of having situated on its interior surface by ULV cold fogging and/or electrostatic spraying an antimicrobe active agent according to the present invention with the fogger/sprayer shown by a simplified block diagram;
Fig. 10 shows a table that reports the test results for ATP swab testing of antimicrobe active cardboard boxes according the present invention packed with food upon arrival in Australia from a sea journey originating in South Africa and
Fig. 11 shows a table that reports the test results for ATP swab testing of overseas shipping containers treated according to the present invention with antimicrobe agent loaded with antimicrobe active cardboard boxes according the present invention packed with food upon arrival in Australia from a sea journey originating in South Africa

### DETAILED DESCRIPTION OF THE INVENTION

The present invention is described more fully in the following disclosure. In this disclosure, there is a discussion of embodiments of the invention and references to the accompanying drawings in which embodiments of the invention are shown. These specific embodiments are provided so that this invention will be understood by those skilled in the art. This invention is not limited to the specific embodiments set forth herein below and in the drawings. The invention is embodied in many different forms -including all permutations and combinations of all, or less than all, of the disclosed elements with points of data being support for the beginning, middle and/or end of a range for a parameter-and should be construed as such with reference to the appended claims as filed and as amended in prosecution.

Referring to the drawings collectively, in general terms and for an overview, embodiments of the antimicrobe agent of the present invention are comprised of the following major components or subassemblies: benzalkonium chloride; hydrogen peroxide or phenoxyethanol; 3-(tri-methoxysilyl)propyldimethyl octadecyl ammonium chloride and deionized water. In the discussion that follows, each of these major components or subassemblies is discussed, along with other structures in the embodiments of this invention. Thereafter, there is a discussion on how to use embodiments of the invention.

In the discussion that follows, "(w/w)" stands for the percent by weight of an ingredient in a composition and is based on the weight of the ingredient divided by the total weight of all ingredients in a composition with the dividend multiplied by 100. A percent by weight (w/w) range is inclusive of the endpoints and includes all points therebetween. IUPAC is an international federation that develops and maintains a naming system and nomenclature for molecules using terminology based upon constituent components. IUPAC naming is general used and has meaning to persons in the art. A CAS Number is a unique numerical identifier assigned by the Chemical Abstracts Service (CAS) to every chemical substance described in the open scientific literature. CAS numbers are general used and have meaning to persons in the art.

In general terms and for an overview, embodiments of the antimicrobe agent are comprised of the following major components: benzalkonium chloride, hydrogen peroxide, 3 TriMethoxysilyl)propyldimethyl octadecyl ammonium chloride, and deionized water. In the discussion that follows, each of these major components is discussed, along with other components/structures in the embodiments of this invention. Thereafter, there is a discussion on how to use the antimicrobe agent.

Benzalkonium chloride is one of two immediate kill agents in the antimicrobe agent. The other being hydrogen peroxide which is discussed herein below. Benzalkonium chloride (BZK) is a quaternary ammonium compound. The molecule has the chemical structure shown below: 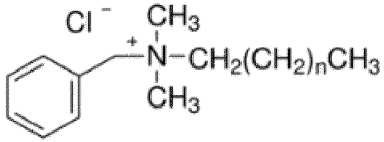 where n = 8, 10, 12, 16 and 18. The molecule has IUPAC names of N-Alkyl-N-benzyl-N,N-dimethylammonium chloride and Alkyldimethylbenzylammonium chloride.

Preferably, the benzalkonium chloride is that of the same which meets the description of Chemical Abstracts Service No. 68424-85-1. That is, quaternary ammonium compounds, benzyl-C12-16-alkyldimethyl, chlorides. As of the filing of the application for this patent, such benzalkonium chlorides are listed substances with the United States Environmental Protection Agency (EPA) and assigned tracking number 429654. Therefore, compounding with the same bodes well for getting regulatory approval and registration of a antimicrobe agent. More preferably, the alkyl component is C12 (dodecyl), C14 (Myristyl), a blend of 40% C12, 50% C14 and 10% C10.

As introduced above, benzalkonium chloride is a fast-acting microbicidal agent having have both bactericidal and virucidal activity, as well as being active against fungi and protozoa. A postulated mode of action is that benzalkonium chloride is a cationic surfactant that dissociates a microbial cellular membrane and thereby compromising cellular permeability controls and inducing leakage of cellular contents. Also postulated is that benzalkonium chloride disrupts/dissociates intermolecular interactions and denatures the tertiary structure of proteins. The result being the deactivation of enzymes essential to microbe respiratory and metabolic activities.

The concentration of the benzalkonium chloride in the antimicrobe agent ranges from about 0.25% percent by weight (w/w) to about 0.75% percent by weight (w/w). In a more preferred embodiment, the concentration of the benzalkonium chloride is about 0.50%. The benzalkonium chloride at the above concentrations in combination with the hydrogen peroxide (discussed below), and perhaps with other ingredients, at the concentrations and relative concentrations as taught herein below, is believed to act in a synergistic manner with disinfection that is heightened from that which can be expected based on the prior art.

Hydrogen peroxide is one of two immediate kill agents in the antimicrobe agent. The other being benzalkonium chloride which is discussed herein above. Hydrogen peroxide is a molecule with an oxygen-oxygen single bond and a single hydrogen bounded to each of the oxygens. Hydrogen peroxide has the chemical formula H₂O₂ or H2O2 and the chemical structure shown below: 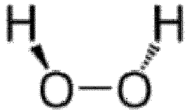 Hydrogen peroxide has a molecular weight in grams per mole of 34.01. Other names for hydrogen peroxide are perhydroxic acid and dihydrogen dioxide.

Preferably, the hydrogen peroxide is that of the same which meets the description of Chemical Abstracts Service No.7722-84-1. As of the filing of the application for this patent, such hydrogen peroxide is a listed substance with the United States Environmental Protection Agency (EPA)and assigned tracking number 153015. Therefore, compounding with the same bodes well for getting regulatory approval and registration of a antimicrobe agent.

Hydrogen peroxide is a strong disinfectant which possesses bactericidal, virucidal, sporicidal and fungicidal activity. This toxicity is attributed to hydrogen peroxide being an oxidizing agent under acidic conditions, including physiological acidic conditions. In particular, the hydrogen peroxide oxidizes in a microbe its proteins, membrane lipids, deoxynucleic acids (DNA) and ribonucleic acids rendering them nonfunctional.

The concentration of hydrogen peroxide in the antimicrobe agent ranges from about 0.02% percent by weight (w/w) to about 1.00 % percent by weight (w/w). In a more preferred embodiment, the concentration of the hydrogen peroxide is about 0.49%. The combination of hydrogen peroxide in the foregoing concentrations and relative concentrations with respect to the benzalkonium chloride in the above taught concentrations and relative concentrations is believed to act in a synergistic manner with disinfection that is heightened from that which can be expected based on the prior art. Further, the combination of hydrogen peroxide in the foregoing concentrations and relative concentrations with respect to the concentrations and relative concentrations of 3-(trimethoxysilyl)propyldimethyl octadecyl ammonium (discussed below), and perhaps other ingredients, is believed to act in a synergistic manner to enhance condensation/polymerization and binding of a formed micro-coating (discussed below) that is heightened from that which can be expected based on the prior art.

The phenoxyethanol is a microbicidal agent/preservative, emulsifier and fixative for a fragrance. The chemical formula is C₈H₁₀O₂ or C8H10O2. The molecule has the chemical structure shown below: 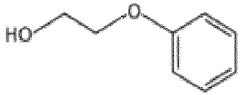 The molecular weight in grams per mole is 138.166. The molecule has the IUPAC name of 2-Phenoxyethanol. Preferably, the phenoxyethanol is that of the same which meets the description of Chemical Abstracts Service No. 122-99-6.

The phenoxyethanol is believed to perform the function of a microbicidal agent/preservative and active against Gram negative bacteria, Gram positive bacteria and yeast. The phenoxyethanol is also believed to be an emulsifier effective against local phases forming within the composition and keeping all ingredients in solution. The phenoxyethanol is also believed to have activity as a fixative for a fragrance.

The phenoxyethanol is an alternative ingredient to hydrogen peroxides. The concentration of a phenoxyethanol is the same as what would be the concentration hydrogen peroxide if it were in the antimicrobe agent. That is, the concentration of phenoxyethanol ranges from about 0.02% percent by weight (w/w) to about 1.00 % percent by weight (w/w). In a more preferred embodiment, the concentration of the phenoxyethanol is about 0.49%. The combination of phenoxyethanol in the foregoing concentrations and relative concentrations with respect to the benzalkonium chloride in the above taught concentrations and relative concentrations is believed to act in a synergistic manner with disinfection that is heightened from that which can be expected based on the prior art. Further, the combination of hydrogen peroxide in the foregoing concentrations and relative concentrations with respect to the concentrations and relative concentrations of 3-(tri-methoxysilyl)propyldimethyl octadecyl ammonium (discussed below), and perhaps other ingredients, is believed to act in a synergistic manner to enhance condensation/polymerization and binding of a formed micro-coating (discussed below) that is heightened from that which can be expected based on the prior art.

The quaternary ammonium silane 3-(trimethoxysilyl)propyldimethyl octadecyl ammonium chloride is the long lasting protect agent of the antimicrobe agent. The molecule has the chemical structure shown below: 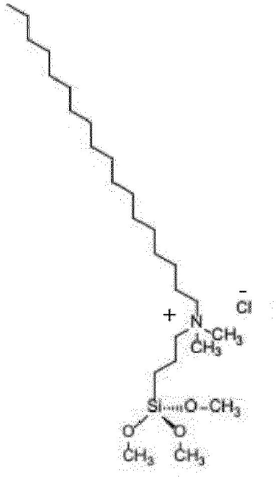 The molecule has the IUPAC name of 1-Octadecanaminium, N,N-dimethyl-N-[3-(trimethoxysilyl)propyl]-, chloride (1:1). The molecular formula is C26H58NO3Si.Cl and the molecular weight is 496.29.

Preferably, the quaternary ammonium silane 3-(trimethoxysilyl)propyldimethyl octadecyl ammonium chloride is that of the same which meets the description of Chemical Abstracts Service No. 27668-52-6. As of the filing of the application for this patent, such quaternary ammonium silane 3-(trimethoxysilyl)propyldimethyl octadecyl ammonium chloride is a listed substances with the United States Environmental Protection Agency (EPA) and assigned tracking number 246561. Therefore, compounding with the same bodes well for getting regulatory approval and registration of a antimicrobe agent.

The believed mode of action of the 3-(trimethoxysilyl)propyldimethyl octadecyl ammonium chloride is as follows. The following discourse on the believed mode of action necessarily overlaps with a discourse on method of use the antimicrobe agent and there is a further discourse on method of use below. The antimicrobe agent containing methoxysilyl)propyldimethyl octadecyl ammonium is applied to an inanimate surface. When the composition dries, a condensation reaction occurs where there is the formation of a micro thin coating of polymerized monomers of 3-(trimethoxysilyl)propyldimethyl octadecyl ammonium with strong covalent bonds between the monomers. The octadecyl alkyl side chain lineup pointing away from the surface. This can be likened to having millions of sword-shaped "road spikes" on the surface. At the base of each of these "swords" is a positively charged quaternary carbon unit.

Each of positively charged quaternary carbon units performs a dual function. One function is to attach the micro-coating to commonly found surfaces which bear a negative charge. The other is to attract/trap microbes with a negatively charged outer membrane. Typically, microbes have an outer membrane comprised of lipoproteins which have long chain fatty acids and glycerides that are anionic in nature.

The alkyl side chain then pierces the outer membrane of the attracted/trapped microbe with organism lysis. The microbe is killed via a form of electrostatic electrocution. The same monomer in the polymerized micro-coating is capable of attacking a new microbe again and again with only a single application. Because it does not kill the organisms by poisoning with toxic chemicals, they cannot adapt to it so there is no possibility of mutation and consequently no possibility of superbugs forming.

In more detail, the 3-(tri-methoxysilyl)propyldimethyl octadecyl ammonium chloride first undergoes an hydrolysis in conjunction with the deionized water (discussed below) to enter into an equilibrium with 3-(tri-hydoxysilyl)propyldimethyl octadecyl ammonium chloride. This hydrolysis is depicted in the chemical drawing and chemical equation shown below: 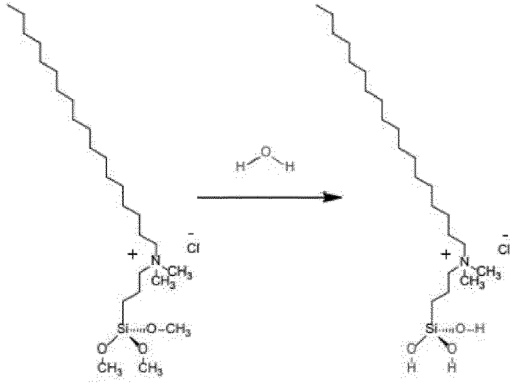 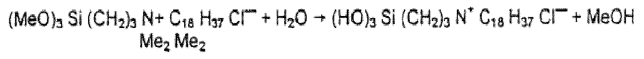 The condensation/polymerization reaction is depicted in the chemical drawing and chemical equation shown below:

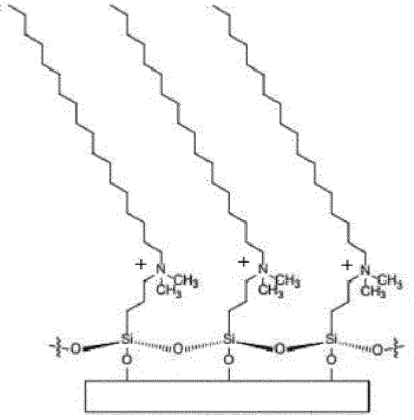

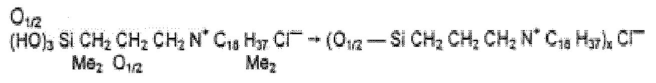

The concentration of 3-(trimethoxysilyl)propyldimethyl octadecyl ammonium in the antimicrobe agent ranges from about 0.25% percent by weight (w/w) to about 0.75% percent by weight (w/w). In a more preferred embodiment, the concentration of the 3-(trimethoxysilyl)propyldimethyl octadecyl ammonium is about 0.50%. The 3-(tri-methoxysilyl)propyldimethyl octadecyl ammonium in combination in the foregoing concentrations and relative concentrations with respect to the hydrogen peroxide in the above taught concentrations and relative concentrations is believed to act in a synergistic manner to enhance the bonding of the micro-coating onto surfaces that is heightened from that which can be expected based on the prior art. Also believed enhanced by the concentrations and relative concentrations of 3-(tri-methoxysilyl)propyldimethyl octadecyl ammonium and hydrogen peroxide as taught herein from that which can be expected based on the prior art is the durability of the micro-coating on various surfaces.

Deionized water is the base/solvent. Water is a molecule with an oxygen atom and two hydrogen atoms singling bounded to the oxygen atom. Water has the chemical formula H₂O or H2O. The molecule has the chemical structure shown below: 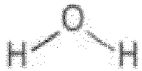 Water has a molecular weight in grams per mole of 18.01528. Being deionized, as a to-be-added ingredient to the composition, the concentration of the water approaches 100%. Accordingly, the melting point of deionized water approaches 0 °C (degrees Celsius) and the boiling point approaches 100 °C. At 20 °C, deionized water has a vapor pressure of 17.5 Torr. Preferably, the deionized water is that of the same which meets the description of Chemical Abstracts Service No. 7732-18-5.

As introduced above, the deionized water is a base/solvent into which the other ingredients are dissolved. The deionized water is also reactant in the hydrolysis discussed above 3-(tri-methoxysilyl)propyldimethyl octadecyl ammonium. The evaporation of the deionized water is integral with the condensation/polymerization of the 3-(trimethoxysilyl)propyldimethyl octadecyl ammonium into a microcoating, as discussed above.

The concentration of deionized water in the antimicrobe agent ranges from about 97.75% percent by weight (w/w) to about 99.25% percent by weight (w/w). The particular concentration of deionized water is a function of the concentration of all other ingredients so that total of every ingredient, including deionized water, is 100%. Accordingly, concentrations are set for 3-(tri-methoxysilyl)propyldimethyl octadecyl ammonium chloride between about 0.25% (w/w) to about 0.75% (w/w), benzalkonium chloride between about 0.25% (w/w) to about 0.75% (w/w) and hydrogen peroxide between about 0.25% (w/w) to about 0.75% (w/w) with deionized water being present in a concentration to achieve the concentrations set for the other ingredients. In a more preferred embodiment, where the concentration of 3-(tri-methoxysilyl)propyldimethyl octadecyl ammonium chloride is about 0.50% (w/w), the concentration all benzalkonium chloride is about 0.50% (w/w) and the concentration of hydrogen peroxide hydrogen peroxide about 0.50% (w/w), the concentration of deionized water is about 98.5% (w/w).

The antimicrobe agent is manufactured by mixing and blending using standard equipment for chemical mixing and blending. That is, the compositions are made using for examples, liquid storage containers, ingredient and product handlers, in-line mixers, co-rotating twin-screw mixers, homogenizers, bottling operations, automation, electronic control and product storage, in the manner in accordance with that prescribed by the manufacturer(s) of the equipment.

The methoxysilyl)propyldimethyl octadecyl ammonium, as discussed above, will react with oxides and hydroxyls on the surface of the surface through the above-described condensation reaction. The bonds formed are covalent and are resistant to rehydration. On evaporation of the water solvent, a durable bonded coating is produced which last at least about 30 days.

The antimicrobe agent is believed, as a general proposition, but not necessarily to every listed species, to be active against:
(1) Gram Positive Bacteria, e.g., cacillus sp. (vegetative cell), corynebacterium diptheriae, micrococcus lutea, micrococcus sp., mycobacterium tuberculosis, mycobacterium smegmatis, propionibacterium acnes, staphylococcus aureus, staphylococcus epidermidis, streptococcus faecalis, streptococcus mutans, streptococcus pneumonia, streptococcus pyogenes;
(2) Gram Negative Bacteria, e.g., acinetobacter calcoaceticus, aeromonas hydrophilia, citrobacter deversus, citrobacter freundi, enterobacter aerogenes, enterobacter aglomerans, enterobacter cloacae, enterococcus, escherichia coli, klebsiella oxytoca, klebsiella pneumoniae, klebsiella terriena, legionella pneumophila, morganella morganii, proteus mirabilis, proteus vulgaris, psseudomonas aeruginosa, pseudomonas fluorscens, salmonella cholera suis, salmonella typhi, salmonella typhimurium, serratia liquifaciens, serratia marcescens, xanthomonas campestris;
(3) Viruses. e.g., adenovirus Type II & IV, bovine adenovirus Type I & IV, corona virus, COVID-19 (SARS-Cov-2), feline pneumonitis, herpes simplex Type I, herpes simplex Type II, human immunodeficiency virus HIV-1 (AIDS), influenza A2 (Aichi), influenza A2 (Asian), influenza B, mumps, parinfluenza (Sendai), rous S arcoma, reovirus Type I, SARS-Cov-2 (COVID-19), simian virus 40, vaccinia, MS2, PRD1, H1N1 (Swine Flu), norovirus, Middle East Respiratory Syndrome (MERS);
(4) Fungi, Algae, Mould, Yeast and Spores, e.g., alterania alternate, aphanizomenon s p., aspergillus flavus, aspergillus niger, aspergillus sydowi, aspergillus terreus, aspergillus versicolor, aspergillus verrucaria, aureobasidium pullans, candida albicans, candida pseudotropocalis, chaetomium globsum, cladosporium cladosporioides, chlorella vulgaris, dreschslera australiensis epidermophyton s p., gliomastix cerealis, gloeophyllum trabeum microsporum s p., microsporum audouinii, monilia grisea, Oscillatoria, penicillium chrysogenum, pencillium commune, penicillium funiculosum, penicillium pinophilium, penicillium variable, phoma fimeti, pithomyces chartarum, poria placenta, Scenedesmus, saccharonyces cerevisiae, scolecobasidium humicola
   Selenastrum s p., trichoderma viride, trichophyton interdigitale Trichophyton maidson, trichophyton mentogrophytes, trichophyton sp. 9 and
(5) Protozoa Parasites, e.g., cryptosporidium parvum (oocysts).

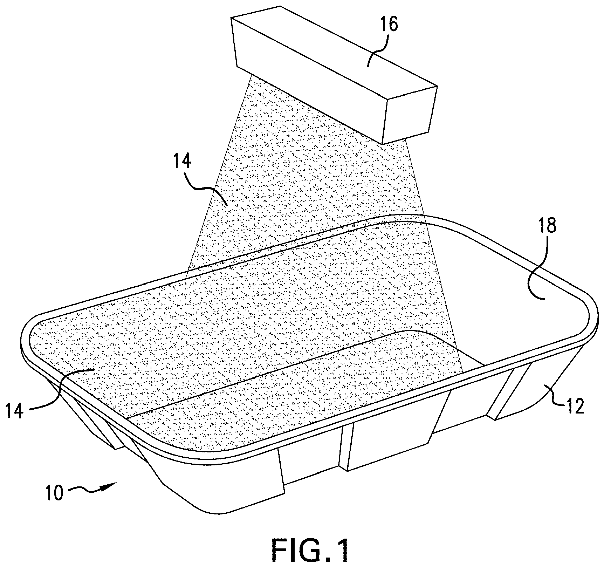

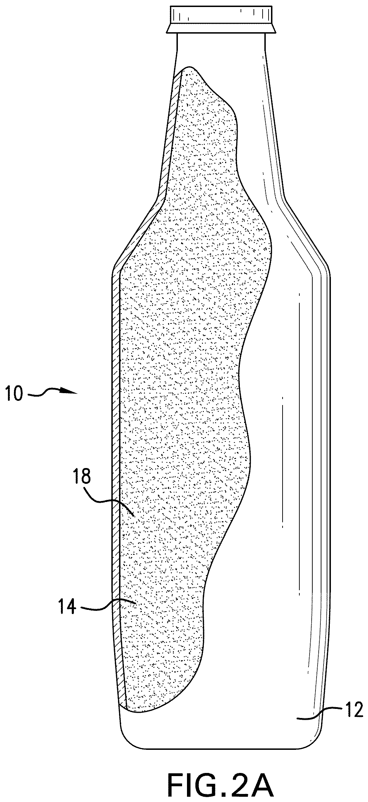

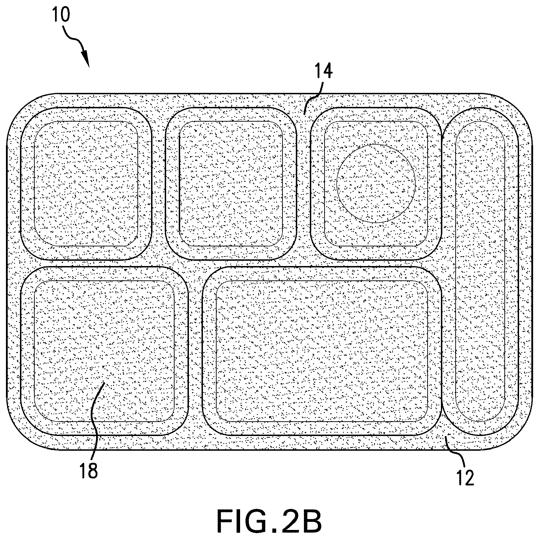

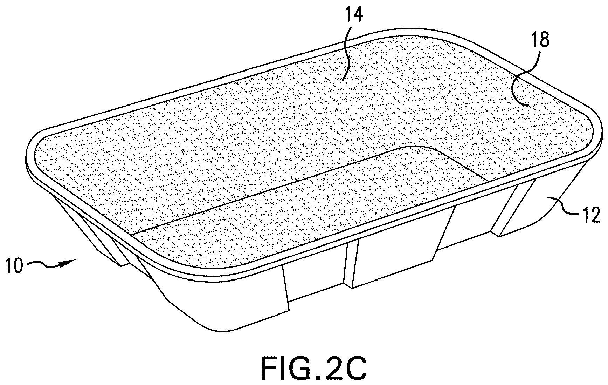

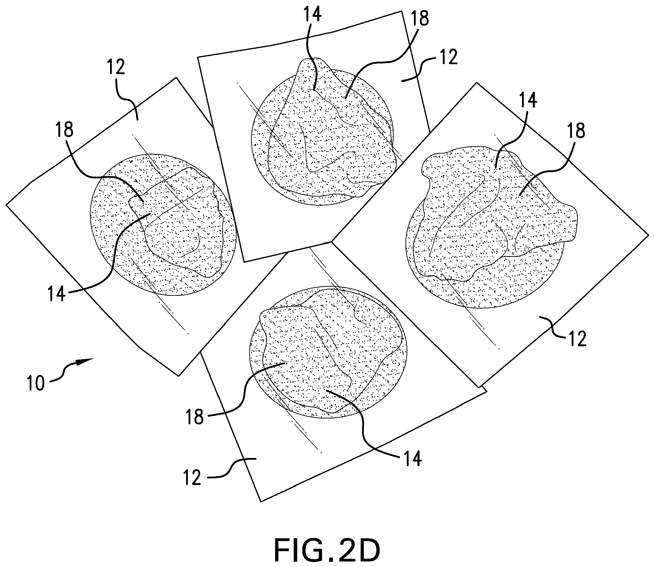

Referring to Figs. 1, 2A, 2B,2C and 2D, embodiments of this invention are antimicrobe supermarket style display ware (10). Supermarket style display ware (12) denotes an omnibus category of articles of manufacture for merchandising food in supermarkets. Supermarket style display ware (12) is generally made from plastics (typically, polystyrene, expanded polystyrene foam (EPS), high impact polystyrene (HIPS), polypropylene, recycled polypropylene (e.g., Corflute brand sheeting), polycarbonate and copolymers of the foregoing); wood derived materials (typically, paper, cardboard and wood itself); non-wood natural plants (typically, sugarcane bagasse, bamboo and biocane); metals (typically, aluminum and alloys) and combinations of the foregoing. These materials are generally fashioned into bags (typically, plastic and paper); bale arm crates (typically, plastic); pouches (typically, Plastic); sheeting (typically, plastic and paper); trays (typically, EPS, HIPS, aluminum and alloy) and wrapping (typically shrink, bubble and pallet.)

Referring to Fig. 1, antimicrobe agent (14) formulated according to this invention as discussed above is situated on supermarket style display ware (12) by spraying, coating, brushing, swabbing or dipping. The situating is typically accomplished using standard commercial production line coating or spraying equipment (16). One off situating can also be done using manual or automated spraying or coating machines. Referring to Figs. 2A, 2B, 2C and 2D, the result being the capability to produce a wide range of antimicrobe supermarket style display ware (10) having interior surfaces (18) situated with antimicrobe agent (14) formulated according to the present invention, see, *supra.*

Referring to Fig. 2D, the antimicrobe supermarket style display ware (10) is loaded with a food in a conventional manner.

The antimicrobe supermarket style display ware (10) is used in a conventional manner; except, that refrigeration, freezing and other prior art food preservation methods, see, supra, may be completely obviated and unnecessary or reduced in intensity. In most all cases, the antimicrobe supermarket style display ware (12) was found to have lowered microbial counts to achieve the result of keeping food fresher for longer and shelf-life extension to enhance food security and safety. The antimicrobe supermarket style display ware (12) is durable with a retention of activity. For example, referring to Fig. 2C, microbiological testing has shown that treated EPS packaging trays can remain anti-microbially active up to a period of at least about five (5) months after dry storage.

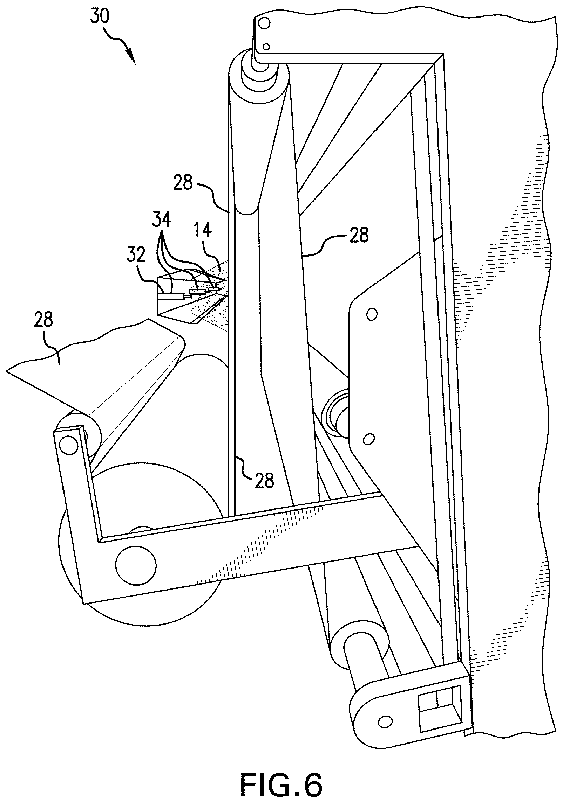

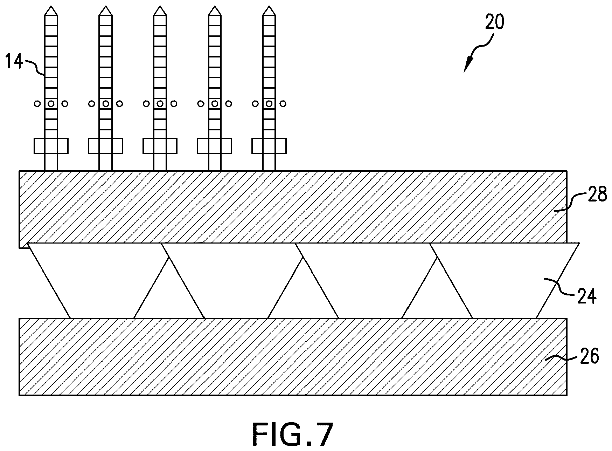

Referring to Figs. 6, 7 and 8, embodiments of this invention are antimicrobe cardboard/corrugated cardboard (20) and antimicrobe cardboard boxes (22). Referring to Fig. 7, depicted is a cross-sectional schematic view of antimicrobe corrugated cardboard (20). The antimicrobe corrugated cardboard (20) is comprised of a corrugated sheet (24), also called a fluted sheet.) To one side of the corrugated sheet there is fused, for example glued, a flat linerboard (26). To the other side there is fused a cover paper (28), also called a paper or linerboard. Antimicrobe agent formulated according to the present invention (14) is situated on the cover paper (28). Atypically, it can also be situated on the linerboard (26) (not illustrated.)

Referring to Fig. 6, antimicrobe corrugated cardboard (20) is made using suitably configured conventional corrugated cardboard plant and assessor equipment. United States patent number 11,241,859 by Brivio which issued on February 8, 2022 is entitled "Plant for the production of corrugated cardboard" ('859 Patent.) United States patent number 6,106,902 by Koskinen which issued on August 22, 2000 is entitled "Method and apparatus for coating a moving paper or cardboard web" ('902' Patent.) Each of these patents are incorporated herein by reference for the limited purpose of enablement.

Continuing to refer to Fig. 6, in an overall sense, corrugated cardboard is produced by affixing a cover paper (28) which is flat to the corrugated side of containerboard. A plant for corrugated cardboard is a continuous flow operation where material moves from one assembly to another. The plant has a gantry (30). The gantry (30) is adapted, inter alia, to provide structural support for idler rollers, guide rollers and/or tension rollers such that cover paper moves over a configuration of said rollers with extended lengths or stretches of cover paper suspended between rollers and/or resting on one side on a glide surface. The gantry (30) is further adapted that a spray coater unit (32) in located in proximity to stretches of cover paper (28) and/or cover paper wrapping around a roller.

Further continuing to refer to Fig. 6 and also to Fig. 7, antimicrobe agent according to present invention (see, *supra*) (14) is misted onto a surface of the cover paper (28) resulting in the cover paper (28) having situated thereon antimicrobe agent (14). Atypically, in the alternative or in addition, antimicrobe agent (14) is misted on linerboard (26) and/or corrugated sheet (24). The volume of antimicrobe agent (14) to treat cardboard is dependent on the quantity of nozzles (34) required per cardboard production machine. This in turn will be dependent on the size of the production facility and production run. Cover paper (28) widths typically range from 600 millimeters (mm) to 2.8 meters (m). Required nozzles (34) can be adjusted to suit. Demonstrated volumes based on 2 or 4 nozzles (34) are typically about:
2 nozzles (34) = 0.062 per meter @ 60 minutes = 3.72 Liters/Hour and
4 nozzles (34) = 0.124 per metre @ 60 minutes = 7.44 liters/Hour.

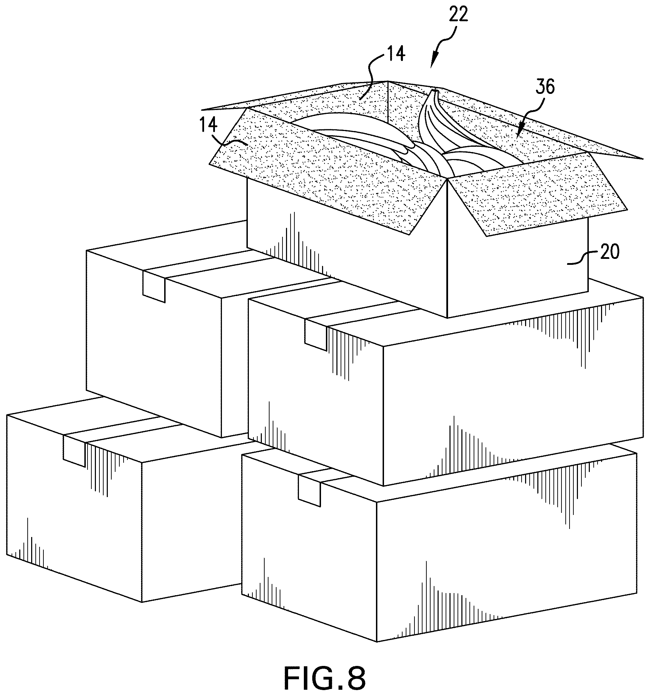

Referring to Fig. 8 and also Fig. 7, in a subsequent phase of manufacturing, the antimicrobe corrugated cardboard (20) is fashioned into an antimicrobe cardboard box (22) having a hold (36) in a manner conventional in the art with the proviso that at least a portion of an antimicrobe agent (14) treated surface (typically cover paper (28)) faces into the hold (36).

Referring to Fig. 8 and also Figs. 2A, 2B, 2C and 2D, the antimicrobe cardboard box (22) is loaded with a food in a conventional manner. Preferably, the food that is loaded is food packed in an antimicrobe supermarket style display ware (10) according to the present invention. The antimicrobe cardboard box (22) is delivered to a carrier for local, regional and/or internationally deliver for transport by air, sea, rail and truck, as is conventionally done.

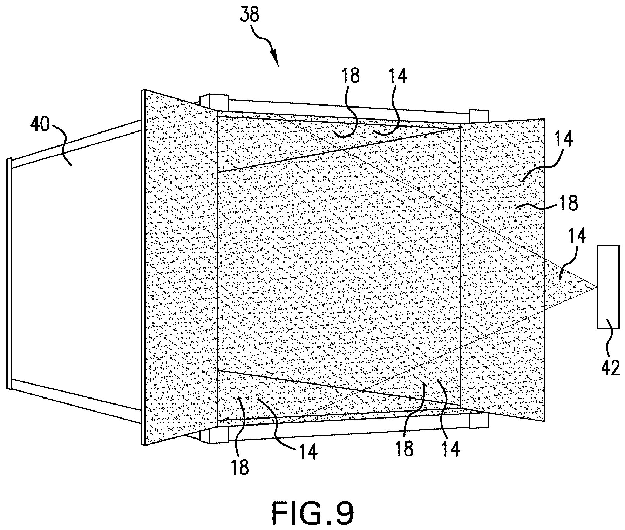

Referring to Fig. 9, embodiments of the invention are an antimicrobe overseas container (38) for containerized shipping. Antimicrobe agent (14) formulated according to the present invention (see, *supra*) is situated on interior surfaces (18) of an overseas shipping container (40) that is clear and clean so as to suitable for loading. Antimicrobe agent (14) is applied to interior surfaces (18) of the overseas container (40) by either ULV cold fogger or an electrostatic sprayer (42). The volume of antimicrobe agent (14) to treat an overseas shipping container (40) where the antimicrobe agent (14) is situated on interior surfaces (18) via ULV cold fogger/Electrostatic backpack sprayer (42) is typically about according to the following schedule:
20ft shipping container - 1 - 1.5 liters (L) and
40ft shipping container - 2 - 2.5 liters (L).

Continuing to refer Fig. 9, the antimicrobe overseas container (38) is loaded with a food in a conventional manner. Referring to Figs. 2A, 2B, 2C, 2D and 8, preferably, the food that is loaded is food packed in an antimicrobe cardboard box (22) and/or antimicrobe supermarket style display ware (10), all according to the present invention. The antimicrobe overseas container (38) is delivered to a shipping line for transport by sea, rail and truck, as is conventionally done.

The previously described versions of the present invention have many advantages. At the highest level, the present invention enhances food security and food safety. The articles and methods advantageously can be applied to a variety of substrates to deliver the combination function of shelf-life extension and to keep food fresher for longer. Another advantage is a broad-spectrum antimicrobial agent that kills and inactivates bacteria, viruses, fungi and molds. Another advantage is an antimicrobial agent that cannot to any significance diminish in strength and is long lasting. Another advantage is an antimicrobial agent that cannot to any significance leave the surface to which it is applied. Another advantage is an antimicrobial agent that cannot to any significance encourage resistance by microorganisms to become resistant. Another advantage is the ability to reduce total bacterial count populations by up to about 90% in food packaging, including food poisoning pathogens. Another advantage is increased food safety across a broad range of packaged foods. Another advantage is contributing to extended shelf life in the market for storage and display.

### EXAMPLES

The following examples further describe and demonstrate embodiments within the scope of the present invention. The examples are given solely for the purpose of illustration and are not to be construed as limitations or restrictions of the present invention, as persons skilled in the art will quickly realize many variations thereof are possible that are all within the spirit and scope of the invention.

### Example 1

### (Oral toxicity of 3-(tri-methoxysilyl)propyldimethyl octadecyl ammonium chloride)

Example 1 is a small animal oral toxicity test of 3-(tri-methoxysilyl)propyldimethyl octadecyl ammonium chloride in aqueous solutions derived from concentrate. The small animal was an albino rat (EPA/MRID.) The result acute oral LD50 at 12.27 g (grams) per kg (kilogram.) That is, the lethal dose in 50% of the test subjects 12.27 grams per kilogram of body weight. This translates to a 100 kg person ingesting 1.227 kg of the raw material (or 1723 liters) at one time. The monomer poses no ingestion hazard.

### Example 2

### (PET water containers)

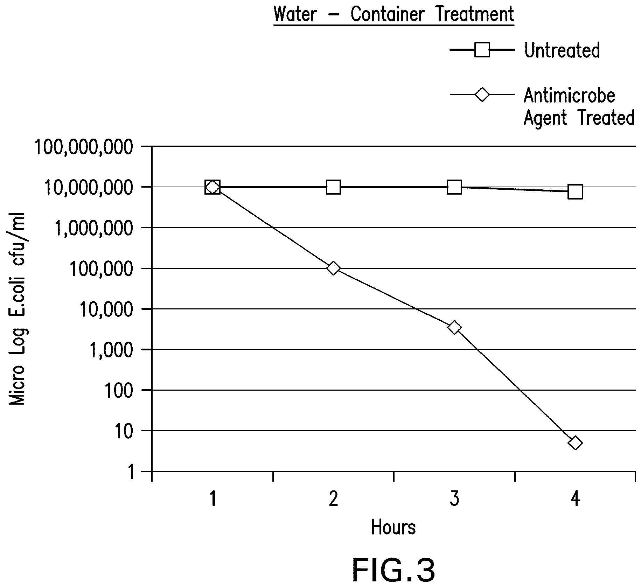

Example 2 is study of the affect on Escherichia coli (E. coli) growth in polyethylene terephathalate (PET) water containers. PET water containers were treated in the manner provided above. Referring to Fig. 3, treatment of PET water containers demonstrated a reduction of E. coli by up to 7 log over a period of 4 hours. The methods and articles disclosed herein have the potential for use in treating water for many uses.

### Example 3

### (Supermarket style display ware trial)

Example 3 is a supermarket style display ware trial. Referring to Fig. 2D., the trials were undertaken with beef, pork, lamb, chicken, offals and sausages. Meats were packed in microbe agent coated and uncoated open and closed cell EPS trays and HIPS trays with coated and uncoated, both in atmospheric and controlled atmosphere environments. Conditions of pack have included atmospheric for 0-7 days at 2°C (degrees Celsius) and CAP for 1-3 weeks at -1.5°C (negative degrees Celsius) plus 5-7 days display at 2°C. Products were stored at the required storage temperatures for set periods of time and sampled according to protocol. Organoleptic & sensory evaluations were carried out throughout.

Referring to the 4A, graphically shown is the results of the trial for beef (rump steak) surface, 21 day series and log APC cfu/cm² (colony forming units per centimeter square.) Product was stored for 21 days @ -1.5°C plus 7 days display @ 2°C. Treated trays demonstrate lower bacterial counts and are less contaminated than untreated. Product tested as cfu/g (grams) followed similar trends in growth curve. Upper bacterial limits set at 1 × 107 or 10,000,000 cfu/cm2 (untreated reaches first). Extension in bacterial storage and display life indicated.

Referring to the 4B, graphically shown is the results of the trial for chicken surface 14 days series, tissue APC cfu/cm at &/g. Treated is less contaminated than untreated over 14 days at -1.5°C plus 5 to 7 days display at 2°C. Growth curves demonstrate potential for extended bacterial display life for treated vs untreated trays.

Referring to the 4C, graphically shown is results from the percent surface skill trial, CRSA OCT; i.e., percent microbial reduction. Results show reduced bacterial count for all 6 product types under trial. The percent meat surface bacterial reduction at the product interface with the tray ranged from 50-92%. Tissue sample results as cfu/g demonstrated comparable reduction profiles These results reflect the aggregate results over each trial storage and display protocol.

Organoleptic/Sensory evaluations were undertaken. All trial product was evaluated throughout for: (i) Color, (ii) Odor, (iii) Taste and (iv) Texture. The results were generally found to conform satisfactorily to the microbiological enumerations and other records and observations made.

All in all, the trials have shown significant reduction in product microbial populations as APC cfu/cm² and APC cfu/g at the contact surface when packaged with microbial agent treated packaging materials. The trials have been successfully undertaken with beef, pork, lamb, chicken, offals and sausages. Significant micobiological count reductions have been achieved within the trial periods from some samples. These results indicate that an increase in food storage shelf/display life may be possible downstream using antimicrobe agent and particularly where a greater surface area can be kept in direct contact with the food. In most all cases treated product was found to have lower microbial counts than untreated and the tissue samples generally reflected the trending of the surface Log APC cfu/cm2 results.

### Example 4

### (Long Lasting effect with antimicrobe supermarket style display ware)

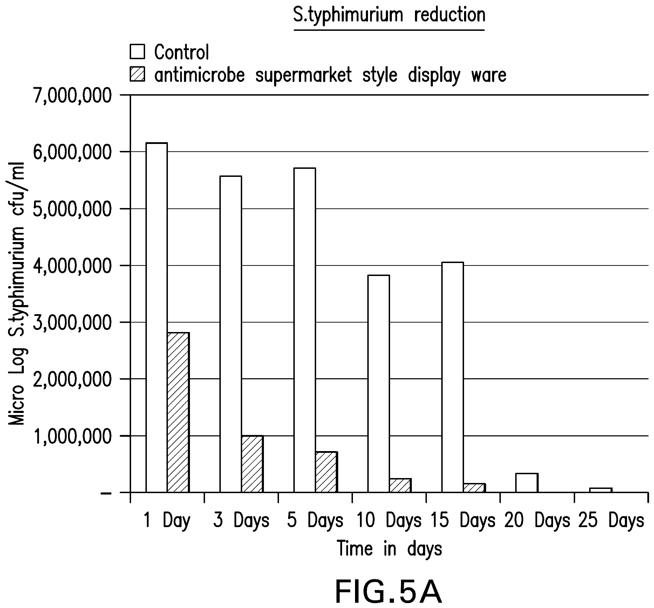

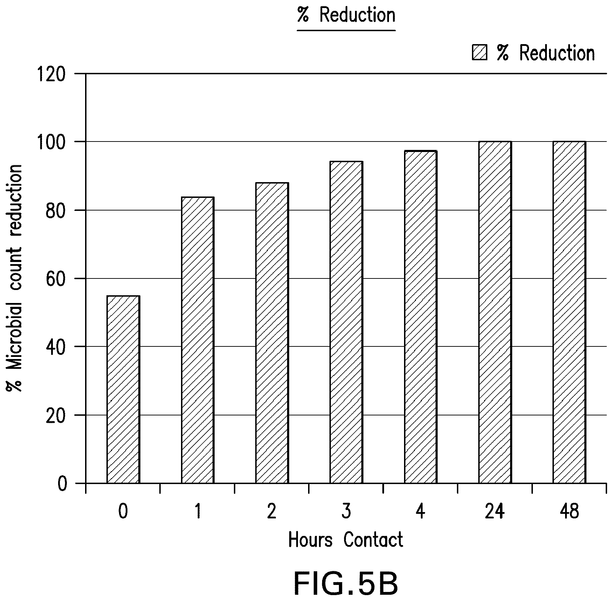

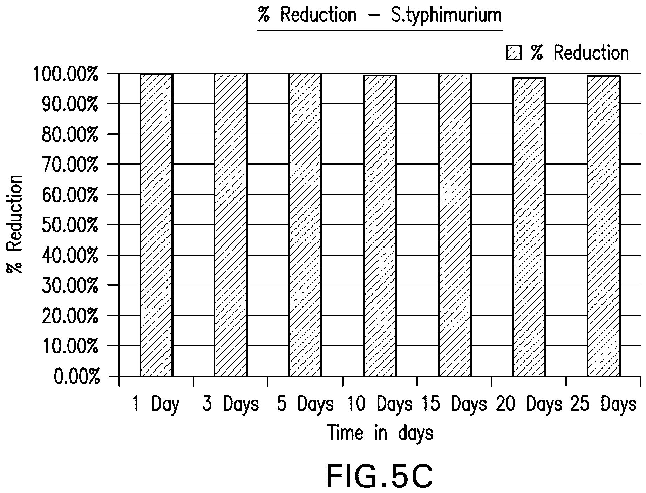

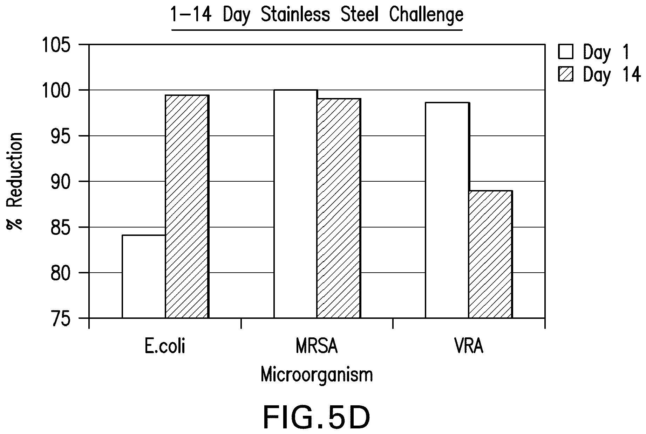

Example 4 is a long-lasting efficacy in production trial. The trial is in the poultry industry interrogating effect against Salmonella typhimurium on plastic tray surfaces. The trial involved commercial treatments. Referring to Figs. 5A and 5B, the data showed a greater than 98% reduction in microbial population in 24 hours and further still at 48 hours and decreases in check mirroring mortality. Referring to Fig. 5C, further trialing of the durable efficacy of antimicrobe treated rigid plastic trays against Salmonella typhimurium has shown continued activity of greater than log 2.0 and greater than 97% population reduction in all case intervals up to 35 days. Referring to Fig. 6D, data is showin from a challenge test over 1 to 14 days on stainless steel. Production was greater than 99% for each of tested escherichia Coli NCTC8196, MRSA (methicillin resistant staphylococcus aureus and ATCC 43300 VRE (vancomycin resistant enterococcus.) As mentioned elsewhere herein, microbiological testing has shown that antimicrobe supermarket style display ware, namely, EPS trays can remain anti-microbialy active up to a period of at least 5 months after dry storage. Trials are continuing as of the filing of the application which matriculated in to this patent.

### Example 5

### (Case studying a shipment from South Africa to Australia)

Example 5 is a case study of a shipment from South Africa to Australia of food packed in antimicrobe active cardboard boxes according to the present invention which were loaded into an overseas shipping containers having antimicrobe agent applied to interior surfaces according to the present invention. Antimicrobe agent was applied to cover paper during a manufacturing phase of cardboard in a cardboard plant. Antimicrobe agent was applied to the overseas shipping containers via an ULV cold fogger and Electrostatic backpack sprayer. The overseas shipping containers were treated with a volume of antimicrobe agent

Contamination upon arrival and Australia was assessed via visible observation and readings taken in ATP Swab testings. An ATP swab test is a process of rapidly measuring actively growing microorganisms through detection of adenosine triphosphate (ATP). The ATP test is premised on ATP being a molecule found in and around living cells. As such it gives a direct measure of biological concentration and health. ATP is quantified by measuring the light produced through its reaction with the naturally occurring firefly enzyme luciferase using a luminometer. The amount of light produced is directly proportional to the amount of ATP present in a tested sample. The results of the ATP swab test were evaluated according to the below for grade scale:

| | |
|---|---|
| Considered Food Safe (A) | 0 - 30 |
| Considered dean (B) | 31 - 100 |
| Caution! (C) | 101 - 200 |
| Contaminated (D) | 201 - 500 |
| High Contamination Risk (E) | 501 - 1000 and |
| Extreme Contamination Risk (F) | 1000+. |

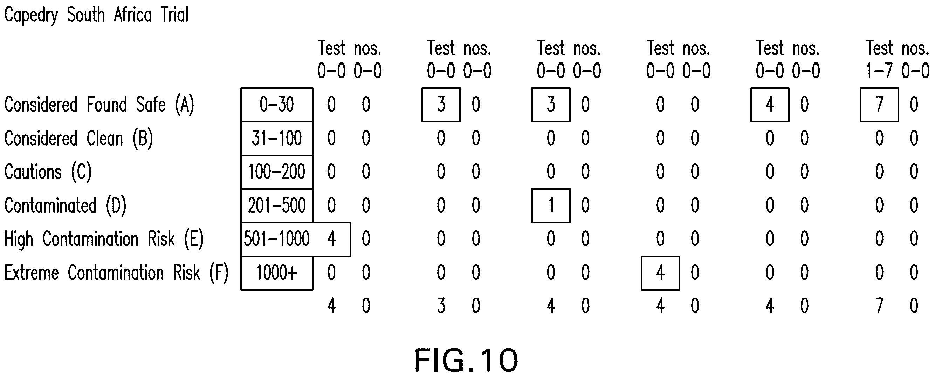

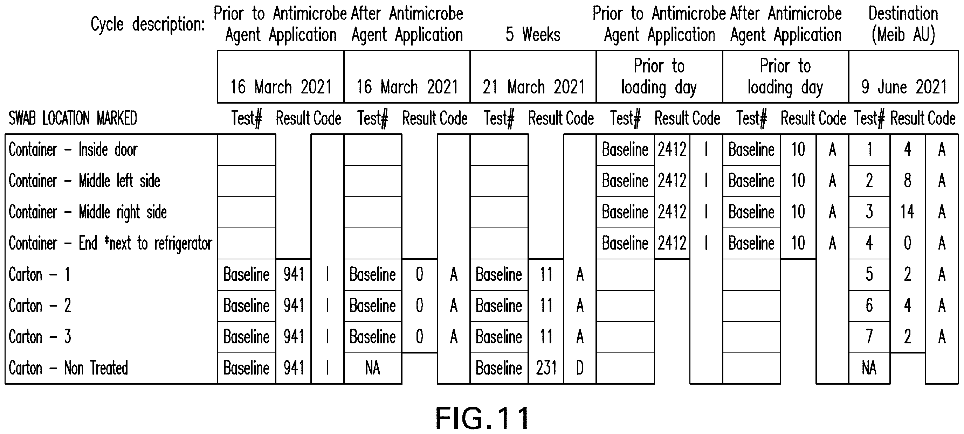

On arrival at Australia, contamination assessments by visual inspection were negative for both the food packed in antimicrobe active cardboard boxes and the overseas shipping containers treated with antimicrobe agent. The test results for ATP swab testing of antimicrobe active cardboard boxes are set out in Fig. 10 and the test results for ATP swab testing of overseas shipping containers is set out in Fig. 11.

### Embodiments of the Invention:

[1] An antimicrobe supermarket style display ware comprised of:
   a) a supermarket style display ware having food contacting surfaces and
   b) situated on at least a portion of the food contacting surfaces is an antimicrobe agent formulated as a composition comprised of:
      i) between about 0.25% (w/w) to about 0.75% (w/w) benzalkonium chloride;
      ii) between about 0.02% (w/w) to about 1.00% (w/w) of a kill agent selected from the group consisting of hydrogen peroxide and phenoxyethanol;
      iii) between about 0.25% (w/w) to about 0.75% (w/w) 3-(tri-methoxysilyl)propyldimethyl octadecyl ammonium chloride and
      iv) between about 97.50% (w/w) to about 99.48% deionized water,
      with the sum of the percentage of all ingredients equaling 100%.
[2] The antimicrobe supermarket style display ware of [1] where the supermarket style display ware is selected from the group consisting of open cell expanded polystyrene foam trays, closed cell expanded polystyrene foam trays, high impact polystyrene trays, absorbent pads, high oxygen flexible barrier vacuum bags, low oxygen flexible barrier vacuum bags, pouches, polyethylene terephthalate bottles, polyethylene terephthalate bottles pouches and overwrap films.
[3] A method for making an antimicrobe supermarket style display ware comprised of:
   a) taking possession of a supermarket style display ware having food contacting surfaces;
   b) taking possession of a supply of antimicrobe agent comprised of:
      i) between about 0.25% (w/w) to about 0.75% (w/w) benzalkonium chloride;
      ii) between about 0.02% (w/w) to about 1.00% (w/w) of a kill agent selected from the group consisting of hydrogen peroxide and phenoxyethanol;
      iii) between about 0.25% (w/w) to about 0.75% (w/w) 3-(tri-methoxysilyl)propyldimethyl octadecyl ammonium chloride and
      iv) between about 97.50% (w/w) to about 99.48% deionized water,
      with the sum of the percentage of all ingredients equaling 100% and
   c) situating antimicrobe agent on least a portion of the food contacting surfaces.
[4] A method for keeping food fresher for longer and shelf-life extension to enhance food security and safety comprised of:
   a) taking possession of a food in a configuration suitable for packaging in a supermarket style display ware;
   b) taking possession of an antimicrobe supermarket style display ware of claim 1 and
   c) packaging the food into the antimicrobe supermarket style display ware.
[5] An antimicrobe active cardboard comprised of two surfaces and a peripheral edge having situated on at least a portion of the surface an antimicrobe agent formulated as a composition comprised of:
   i) between about 0.25% (w/w) to about 0.75% (w/w) benzalkonium chloride;
   ii) between about 0.02% (w/w) to about 1.00% (w/w) of a kill agent selected from the group consisting of hydrogen peroxide and phenoxyethanol;
   iii) between about 0.25% (w/w) to about 0.75% (w/w) 3-(tri-methoxysilyl)propyldimethyl octadecyl ammonium chloride and
   iv) between about 97.50% (w/w) to about 99.48% deionized water,

   with the sum of the percentage of all ingredients equaling 100%,
   whereby said planar surface is designated as an antimicrobe active surface.
[6] The antimicrobe active cardboard of [5] were said antimicrobe activate cardboard is fashioned as a container for bulk packaging food having a holding space where at least a portion of the antimicrobe active surface faces the holding space, whereby said container is designated an antimicrobe container for bulk packaging food.
[7] A manufacturing phase method of making an antimicrobe active cardboard comprised of:
   a) taking possession of a supply of antimicrobe agent comprised of:
      i) between about 0.25% (w/w) to about 0.75% (w/w) benzalkonium chloride;
      ii) between about 0.02% (w/w) to about 1.00% (w/w) of a kill agent selected from the group consisting of hydrogen peroxide and phenoxyethanol;
      iii) between about 0.25% (w/w) to about 0.75% (w/w) 3-(trimethoxysilyl)propyldimethyl octadecyl ammonium chloride and
      iv) between about 97.50% (w/w) to about 99.48% deionized water,
      with the sum of the percentage of all ingredients equaling 100%;
   b) utilizing a corrugated cardboard plant having a gantry adapted with a mist system where cover paper passes and is misted with antimicrobe agent and
   c) misting at least a portion of the cover paper with antimicrobe agent,
   whereby said misted cover paper is designated as an antimicrobe active surface.
[8] The manufacturing phase method of [7] where the mist system is comprised of an about 5 micron to an about 20 micron nozzle spray assembly across the corrugated cardboard plant delivering a fine mist to the cover paper.
[9] The manufacturing phase method [7] with the additional phase of configuring the antimicrobe active cardboard into a container for bulk packaging food having a holding space where at least a portion of the active surface faces the holding space, whereby said container is designated an antimicrobe container for bulk packaging food.
[10] A method for keeping food fresher for longer and shelf-life extension to enhance food security and safety comprised of:
   a) taking possession of a food;
   b) taking possession of an antimicrobe container for bulk packaging of food of claim 6 and
   c) packing the food into the antimicrobe container for bulk packing.
[11] The method for keeping food fresher for longer and shelf-life extension to enhance food security and safety of [10] where the food is a food packaged into an antimicrobe super market style tray according to [4].
[12] A method for transforming a container used in containerized shipping having a holding space defined by interior surfaces of the container into an antimicrobe container used in containerized shipping comprised of the steps of:
   a) receiving a shipping container utilized in containerized shipping that is of a clean and empty nature so as to be suitable for loading;
   b) taking possession of a supply of antimicrobe agent comprised of:
      i)between about 0.25% (w/w) to about 0.75% (w/w) benzalkonium chloride;
      ii) between about 0.02% (w/w) to about 1.00% (w/w) of a kill agent selected from the group consisting of hydrogen peroxide and phenoxyethanol;
      iii) between about 0.25% (w/w) to about 0.75% (w/w) 3-(tri-methoxysilyl)propyldimethyl octadecyl ammonium chloride and
      iv) between about 97.50% (w/w) to about 99.48% deionized water,
      with the sum of the percentage of all ingredients equaling 100% and
   c) applying antimicrobe agent to at least a portion of the interior surfaces of said shipping container.
[13] The method of [12] for transforming a container used in containerized shipping into an antimicrobe container used in containerized shipping where the applying is done by a method selected from the group of methods consisting of ULV cold fogging and electrostatic spraying.
[14] A method for keeping food fresher for longer and shelf-life extension to enhance food security and safety comprised of:
   a) taking possession of a food;
   b) taking possession of an antimicrobe transformed container used in containerized shipping according to claim 12;
   c) packing the food into the antimicrobe transformed container used in containerized shipping.
[15] The method for keeping food fresher for longer and shelf-life extension to enhance food security and safety of [14] where the food is a food packed into an antimicrobe container for bulk packing according to [10].
[16] The method for keeping food fresher for longer and shelf-life extension to enhance food security and safety of [14] where the food is a food packaged into an antimicrobe super market style tray which is packed into an antimicrobe container for bulk packing according to [11].
[17] An antimicrobe supermarket style display ware comprised of:
   c) a supermarket style display ware having food contacting surfaces and
   d) situated on at least a portion of the food contacting surfaces is an antimicrobe agent formulated as a composition comprised of:
      i) about 0.50% (w/w) benzalkonium chloride;
      ii) about 0.49% (w/w) of a kill agent selected from the group consisting of hydrogen peroxide and phenoxyethanol);
      iii) about 0.50% (w/w) 3-(tri-methoxysilyl)propyldimethyl octadecyl ammonium chloride and
      iv) about 98.51% (w/w) deionized water.
[18] The antimicrobe supermarket style display ware of [17] where the supermarket style display ware is selected from the group consisting of open cell expanded polystyrene foam trays, closed cell expanded polystyrene foam trays, high impact polystyrene trays, absorbent pads, high oxygen flexible barrier vacuum bags, low oxygen flexible barrier vacuum bags, pouches, polyethylene terephthalate bottles, polyethylene terephthalate bottles pouches and overwrap films.
[19] A method for making an antimicrobe supermarket style display ware comprised of:
   a) taking possession of a supermarket style display ware having food contacting surfaces;
   b) taking possession of a supply of antimicrobe agent comprised of:
      i) about 0.50% (w/w) benzalkonium chloride;
      ii) about 0.49% (w/w) of a kill agent selected from the group consisting of hydrogen peroxide and phenoxyethanol);
      iii) about 0.50% (w/w) 3-(tri-methoxysilyl)propyldimethyl octadecyl ammonium chloride and
      iv) about 98.51% (w/w) deionized water and
   c) situating antimicrobe agent on least a portion of the food contacting surfaces.
[20] A method for keeping food fresher for longer and shelf-life extension to enhance food security and safety comprised of:
   a) taking possession of a food in a configuration suitable for packaging in a supermarket style display ware;
   b) taking possession of an antimicrobe supermarket style display ware of [17] and
   c) packaging the food into the antimicrobe supermarket style display ware.
[21] An antimicrobe active cardboard comprised of two surfaces and a peripheral edge having situated on at least a portion of the surface an antimicrobe agent formulated as a composition comprised of:
   i) about 0.50% (w/w) benzalkonium chloride;
   ii) about 0.49% (w/w) of a kill agent selected from the group consisting of hydrogen peroxide and phenoxyethanol);
   iii) about 0.50% (w/w) 3-(tri-methoxysilyl)propyldimethyl octadecyl ammonium chloride and
   iv) about 98.51% (w/w) deionized water,
   whereby said planar surface is designated as an antimicrobe active surface.
[22] The antimicrobe active cardboard of [21] were said antimicrobe activate cardboard is fashioned as a container for bulk packaging food having a holding space where at least a portion of the antimicrobe active surface faces the holding space, whereby said container is designated an antimicrobe container for bulk packaging food.
[23] A manufacturing phase method of making an antimicrobe active cardboard comprised of:
   a) taking possession of a supply of antimicrobe agent comprised of:
      i) about 0.50% (w/w) benzalkonium chloride;
      ii) about 0.49% (w/w) of a kill agent selected from the group consisting of hydrogen peroxide and phenoxyethanol);
      iii) about 0.50% (w/w) 3-(tri-methoxysilyl)propyldimethyl octadecyl ammonium chloride and
      iv) about 98.51% (w/w) deionized water;
   b) utilizing a corrugated cardboard plant having a gantry adapted with a mist system where cover paper passes and is misted with antimicrobe agent and
   c) misting at least a portion of the cover paper with antimicrobe agent,
   whereby said misted cover paper is designated as an antimicrobe active surface.
[24] The manufacturing phase method of [23] where the mist system is comprised of an about 5 micron to an about 20 micron nozzle spray assembly across the corrugated cardboard plant delivering a fine mist to the cover paper.
[25] The manufacturing phase method [23] with the additional phase of configuring the antimicrobe active cardboard into a container for bulk packaging food having a holding space where at least a portion of the active surface faces the holding space, whereby said container is designated an antimicrobe container for bulk packaging food.
[26] A method for keeping food fresher for longer and shelf-life extension to enhance food security and safety comprised of:
   a) taking possession of a food;
   b) taking possession of an antimicrobe container for bulk packaging of food of claim 22 and
   c) packing the food into the antimicrobe container for bulk packing.
[27] The method for keeping food fresher for longer and shelf-life extension to enhance food security and safety of [26] where the food is a food packaged into an antimicrobe super market style tray according to [20].
[28] A method for transforming a container used in containerized shipping having a holding space defined by interior surfaces of the container into an antimicrobe container used in containerized shipping comprised of the steps of:
   a) receiving a shipping container utilized in containerized shipping that is of a clean and empty nature so as to be suitable for loading;
   b) taking possession of a supply of antimicrobe agent comprised of:
      i) about 0.50% (w/w) benzalkonium chloride;
      ii) about 0.49% (w/w) of a kill agent selected from the group consisting of hydrogen peroxide and phenoxyethanol);
      iii) about 0.50% (w/w) 3-(tri-methoxysilyl)propyldimethyl octadecyl ammonium chloride and
      iv) about 98.51% (w/w) deionized water and
   c) applying antimicrobe agent to at least a portion of the interior surfaces of said shipping container.
[29] The method of [28] for transforming a container used in containerized shipping into an antimicrobe container used in containerized shipping where the applying is done by a method selected from the group of methods consisting of ULV cold fogging and electrostatic spraying.
[30] A method for keeping food fresher for longer and shelf-life extension to enhance food security and safety comprised of:
   a) taking possession of a food;
   b) taking possession of an antimicrobe transformed container used in containerized shipping according to claim 28;
   c) packing the food into the antimicrobe transformed container used in containerized shipping.
[31] The method for keeping food fresher for longer and shelf-life extension to enhance food security and safety of [30] where the food is a food packed into an antimicrobe container for bulk packing according to [26].
[32] The method for keeping food fresher for longer and shelf-life extension to enhance food security and safety of [30] where the food is a food packaged into an antimicrobe super market style tray which is packed into an antimicrobe container for bulk packing according to [27].

Although the present invention has been described in considerable detail with reference to certain preferred versions thereof, other versions are possible with substituted, varied and/or modified materials and steps are employed - including all permutations and combinations of all, or less than all, of the disclosed elements with points of data being support for the beginning, middle and/or end of a range for a parameter. These other versions do not depart from the invention. Therefore, the spirit and scope of the appended claims should not be limited to the description of the preferred versions contained herein.

## Claims

1. An antimicrobe supermarket style display ware comprised of:
a) a supermarket style display ware having food contacting surfaces and
b) situated on at least a portion of the food contacting surfaces is an antimicrobe agent formulated as a composition comprised of:
i) between about 0.25% (w/w) to about 0.75% (w/w) benzalkonium chloride;
ii) between about 0.02% (w/w) to about 1.00% (w/w) of a kill agent selected from the group consisting of hydrogen peroxide and phenoxyethanol;
iii) between about 0.25% (w/w) to about 0.75% (w/w) 3-(tri-methoxysilyl)propyldimethyl octadecyl ammonium chloride and
iv) between about 97.50% (w/w) to about 99.48% deionized water,
with the sum of the percentage of all ingredients equaling 100%.

2. The antimicrobe supermarket style display ware of claim 1 where the supermarket style display ware is selected from the group consisting of open cell expanded polystyrene foam trays, closed cell expanded polystyrene foam trays, high impact polystyrene trays, absorbent pads, high oxygen flexible barrier vacuum bags, low oxygen flexible barrier vacuum bags, pouches, polyethylene terephthalate bottles, polyethylene terephthalate bottles pouches and overwrap films.

3. A method for making an antimicrobe supermarket style display ware comprised of:
a) taking possession of a supermarket style display ware having food contacting surfaces;
b) taking possession of a supply of antimicrobe agent comprised of:
i) between about 0.25% (w/w) to about 0.75% (w/w) benzalkonium chloride;
ii) between about 0.02% (w/w) to about 1.00% (w/w) of a kill agent selected from the group consisting of hydrogen peroxide and phenoxyethanol;
iii) between about 0.25% (w/w) to about 0.75% (w/w) 3-(tri-methoxysilyl)propyldimethyl octadecyl ammonium chloride and
iv) between about 97.50% (w/w) to about 99.48% deionized water,
with the sum of the percentage of all ingredients equaling 100% and
c) situating antimicrobe agent on least a portion of the food contacting surfaces.

4. A method for keeping food fresher for longer and shelf-life extension to enhance food security and safety comprised of:
a) taking possession of a food in a configuration suitable for packaging in a supermarket style display ware;
b) taking possession of an antimicrobe supermarket style display ware of claim 1 and
c) packaging the food into the antimicrobe supermarket style display ware.

5. An antimicrobe active cardboard comprised of two surfaces and a peripheral edge having situated on at least a portion of the surface an antimicrobe agent formulated as a composition comprised of:
i) between about 0.25% (w/w) to about 0.75% (w/w) benzalkonium chloride;
ii) between about 0.02% (w/w) to about 1.00% (w/w) of a kill agent selected from the group consisting of hydrogen peroxide and phenoxyethanol;
iii) between about 0.25% (w/w) to about 0.75% (w/w) 3-(trimethoxysilyl)propyldimethyl octadecyl ammonium chloride and
iv) between about 97.50% (w/w) to about 99.48% deionized water,
with the sum of the percentage of all ingredients equaling 100%,
whereby said planar surface is designated as an antimicrobe active surface.

6. The antimicrobe active cardboard of claim 5 were said antimicrobe activate cardboard is fashioned as a container for bulk packaging food having a holding space where at least a portion of the antimicrobe active surface faces the holding space, whereby said container is designated an antimicrobe container for bulk packaging food.

7. A manufacturing phase method of making an antimicrobe active cardboard comprised of:
a) taking possession of a supply of antimicrobe agent comprised of:
i) between about 0.25% (w/w) to about 0.75% (w/w) benzalkonium chloride;
ii) between about 0.02% (w/w) to about 1.00% (w/w) of a kill agent selected from the group consisting of hydrogen peroxide and phenoxyethanol;
iii) between about 0.25% (w/w) to about 0.75% (w/w) 3-(trimethoxysilyl)propyldimethyl octadecyl ammonium chloride and
iv) between about 97.50% (w/w) to about 99.48% deionized water,
with the sum of the percentage of all ingredients equaling 100%;
b) utilizing a corrugated cardboard plant having a gantry adapted with a mist system where cover paper passes and is misted with antimicrobe agent and
c) misting at least a portion of the cover paper with antimicrobe agent,
whereby said misted cover paper is designated as an antimicrobe active surface.

8. The manufacturing phase method of Claim 7 wherein:
a) the mist system is comprised of an about 5 micron to an about 20 micron nozzle spray assembly across the corrugated cardboard plant delivering a fine mist to the cover paper; and/or
b) the method has the additional phase of configuring the antimicrobe active cardboard into a container for bulk packaging food having a holding space where at least a portion of the active surface faces the holding space, whereby said container is designated an antimicrobe container for bulk packaging food.

9. A method for keeping food fresher for longer and shelf-life extension to enhance food security and safety comprised of:
a) taking possession of a food;
b) taking possession of an antimicrobe container for bulk packaging of food of claim 6 and
c) packing the food into the antimicrobe container for bulk packing.

10. The method for keeping food fresher for longer and shelf-life extension to enhance food security and safety of Claim 9 where the food is a food packaged into an antimicrobe super market style tray according to Claim 4.

11. A method for transforming a container used in containerized shipping having a holding space defined by interior surfaces of the container into an antimicrobe container used in containerized shipping comprised of the steps of:
a) receiving a shipping container utilized in containerized shipping that is of a clean and empty nature so as to be suitable for loading;
b) taking possession of a supply of antimicrobe agent comprised of:
i)between about 0.25% (w/w) to about 0.75% (w/w) benzalkonium chloride;
ii) between about 0.02% (w/w) to about 1.00% (w/w) of a kill agent selected from the group consisting of hydrogen peroxide and phenoxyethanol;
iii) between about 0.25% (w/w) to about 0.75% (w/w) 3-(tri-methoxysilyl)propyldimethyl octadecyl ammonium chloride and
iv) between about 97.50% (w/w) to about 99.48% deionized water,
with the sum of the percentage of all ingredients equaling 100% and
c) applying antimicrobe agent to at least a portion of the interior surfaces of said shipping container.

12. The method of claim 11 for transforming a container used in containerized shipping into an antimicrobe container used in containerized shipping where the applying is done by a method selected from the group of methods consisting of ULV cold fogging and electrostatic spraying.

13. A method for keeping food fresher for longer and shelf-life extension to enhance food security and safety comprised of:
a) taking possession of a food;
b) taking possession of an antimicrobe transformed container used in containerized shipping according to claim11;
c) packing the food into the antimicrobe transformed container used in containerized shipping.

14. The method for keeping food fresher for longer and shelf-life extension to enhance food security and safety of Claim 13 wherein:
(a) the food is a food packed into an antimicrobe container for bulk packing according to Claim9; and/or
(b) the food is a food packaged into an antimicrobe super market style tray which is packed into an antimicrobe container for bulk packing according to Claim10.

15. An antimicrobe supermarket style display ware according to Claim 1 or Claim 2, a method for making an antimicrobe supermarket style display ware according to claim 3, an antimicrobe active cardboard according to Claim 5 or Claim 6, a manufacturing phase method of making an antimicrobe active cardboard according to Claim 7 or Claim 8, or a method of transforming a container according to Claim 11 or 12 wherein the anitimicrobe agent is formulated as a composition comprised of:
i) about 0.50% (w/w) benzalkonium chloride;
ii) about 0.49% (w/w) of a kill agent selected from the group consisting of hydrogen peroxide and phenoxyethanol);
iii) about 0.50% (w/w) 3-(tri-methoxysilyl)propyldimethyl octadecyl ammonium chloride and
iv) about 98.51% (w/w) deionized water.
